(19)

Europäisches
Patentamt

European
Patent Office

Office européen
des brevets

(11) **EP 2 003 759 B1**

(12) **EUROPÄISCHE PATENTSCHRIFT**

(45) Veröffentlichungstag und Bekanntmachung des
Hinweises auf die Patenterteilung:
**04.03.2020 Patentblatt 2020/10**

(51) Int Cl.:
***H02J 3/38*** *(2006.01)*

(21) Anmeldenummer: **07013347.5**

(22) Anmeldetag: **07.07.2007**

(54) **Verfahren zur Inselnetzerkennung**

Method for detection of grid islanding

Procédé destiné à la détection d'un réseau îloté

(84) Benannte Vertragsstaaten:
**AT BE BG CH CY CZ DE DK EE ES FI FR GB GR
HU IE IS IT LI LT LU LV MC MT NL PL PT RO SE
SI SK TR**

(30) Priorität: **14.06.2007 EP 07011655**

(43) Veröffentlichungstag der Anmeldung:
**17.12.2008 Patentblatt 2008/51**

(73) Patentinhaber: **SMA Solar Technology AG
34266 Niestetal (DE)**

(72) Erfinder:
• **Strnad , Michael
34260 Kaufungen (DE)**
• **Bechtel, Neidhardt
34130 Kassel (DE)**

• **Hardt, Christian
34128 Kassel (DE)**

(56) Entgegenhaltungen:
**EP-A- 1 764 894    DE-A1- 19 949 997
US-A- 5 587 662    US-A1- 2003 165 036**

• **JERAPUTRA C ET AL: "Development of a robust
anti-islanding algorithm for utility
interconnection of distributed fuel cell powered
generation" APPLIED POWER ELECTRONICS
CONFERENCE AND EXPOSITION, 2004. APEC
'04. N INETEENTH ANNUAL IEEE ANAHEIM, CA,
USA 22-26 FEB. 2004, PISCATAWAY, NJ,
USA,IEEE, Bd. 3, 22. Februar 2004 (2004-02-22),
Seiten 1534-1540, XP010705286 ISBN:
978-0-7803-8269-5**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 003 759 B1

**Beschreibung**

Die Erfindung betrifft ein Verfahren zur Inselnetzerkennung für einen eine Stromrichterspannung führenden Wechselrichter, der parallel zu einem Energieversorgungsnetz mit einer Netzfrequenz und mit elektrischen Verbrauchern verbindbar ist und der durch eine Drossel vom Energieversorgungsnetz entkoppelt ist.

Für solche Eigenerzeugungsanlagen gelten häufig Sondertarife, so dass es für den Betreiber solcher Anlagen attraktiv ist, den erzeugten Strom ins öffentliche Versorgungsnetz einzuspeisen. Beim Parallelbetrieb mit dem öffentlichen Netz müssen besondere Sicherheits- und Anschlussbedingungen berücksichtigt werden.

Besonders hervorzuheben ist dabei eine vorhandene Netzüberwachung. Eine Eigenerzeugungsanlage muss erkennen, ob das öffentliche Netz ausfällt, und dann ihren Betrieb einstellen. Sie darf nicht weiter in das Netz einspeisen, weil eventuell bei Wartungsarbeiten im öffentlichen Netz eine Personengefährdung eintreten kann, wenn ein Netzabschnitt freigeschaltet wurde, die Eigenerzeugungsanlage in diesem Abschnitt aber weiterarbeitet.

Bekannte Netzüberwachungsverfahren werden in passive und aktive Verfahren unterteilt. Passive Verfahren werten nur die Messwerte von Netzspannung (ein- oder dreiphasig) und Netzfrequenz aus. Aktive Verfahren beeinflussen durch Strom- oder Spannungsverzerrungen das Netz derart, dass aus der Antwort auf die Netzparameter bzw. auf die Netzimpedanz geschlossen werden kann. Durch eine Stromverzerrung erhält man eine Spannungsantwort, durch eine Spannungsverzerrung eine Stromantwort.

Es sind Verfahren zur Inselnetzerkennung bekannt, die auf einer periodischen Frequenzänderung der Stromrichterspannung beruhen. Hierbei wird die Stromrichterfrequenz für einen Teil einer Periode, für eine Periode oder für eine Vielzahl von Perioden leicht geändert. Dadurch kommt es zu einer Phasendifferenz zwischen der Stromrichterspannung und der Netzspannung, so dass ein entsprechender Ausgleichsstrom fliesst. Wenn das Netz wegfällt, folgt das Inselnetz der Frequenzänderung. Durch eine positives Rückkopplung kann das Weglaufen der Frequenz beschleunigt und ein Abschalten über Frequenzgrenzwertverletzung erzielt werden.

In Verbindung mit spannungsgeregelten Wechselrichtern führt eine variierende Phasendifferenz jedoch zu unerwünschten Wirkleistungsflüssen.

In der EP 1340988 A2 wird ein Verfahren vorgestellt, das auf einer Einprägung eines Prüfstromes in das Netz basiert. Dieser Prüfstrom hat dabei mindestens zwei andere Frequenzen als die Netzfrequenz. Durch Messung von Strom und Spannung bei diesen Prüffrequenzen wird die Impedanz des Netzes bei diesen Prüffrequenzen ermittelt. Daraus wird wiederum auf die Impedanz bei Netzfrequenz geschlossen. Bei starken Impedanzänderungen wird dann davon ausgegangen, dass eine Inselnetzbildung vorliegt.

Das Verfahren ist jedoch rechenzeitaufwändig, da die Berechnung der Impedanzen mittels komplexer Algorithmen (z.B. FFT) durchgeführt werden.

Weiterhin sind Verfahren zur Inselnetzerkennung bekannt, die auf einer Einprägung eines pulsförmigen Prüfstroms beruhen. In gewissen zeitlichen Abständen wird in der Nähe des Nulldurchgangs der Netzspannung ein pulsförmiger Prüfstrom eingeprägt. Wenn der Nulldurchgang der Netzspannung von diesem Prüfstrom über eine einstellbare Grenze hinaus verschoben wird, wird daraus geschlossen, dass eine Impedanzänderung und damit eine Inselnetzbildung vorliegt.

Das Einprägen eines periodischen, pulsförmigen Stromes verursacht jedoch unangenehme Geräusche, ähnlich dem Ticken eines Weckers. Um eine Inselnetzbildung sauber erkennen zu können, sind ausserdem hohe Pulsströme erforderlich, die zu einer zusätzlichen Bauteilbelastung im Stromrichter führen. Das Verfahren ist zudem sehr empfindlich, wenn durch Rundsteuersignale auf der Netzspannung Verschiebungen des Nulldurchgangs erkannt werden. Insofern könnte auch hier eine Inselnetzbildung erkannt werden, obwohl sie nicht vorliegt.

EP 17648994 A1 offenbart ein Inselnetzerkennungsverfahren für einen Stromrichter, bei dem alternierend ein vor- bzw. nachlaufender Blindstromanteil erzeugt wird. Führt dieser zu Sprüngen in der Spannung, wird ein Inselnetz erkannt und der Wechselrichter trennt sich vom Netz.

In US 2003/0165036 A1 wird vorgeschlagen, dass ein Stromrichter bei jeder Halbwelle des Netzes dem eingespeisten Strom ein weisses Rauschen überlagert, um aus der hierdurch verursachten Frequenzabweichung eine Inselnetzsituation zu erkennen.

Der Artikel "Development of a Robust Anti-Islanding Algorithm for Utility Interconnection of Distributed Fuel Cell Powered Generation" von Chuttchaval Jeraputra et al., veröffentlicht in IEEE Transactions on Power Electronics, Vol. 19, No. 5, 2004, befasst sich mit der Anbindung einer Brennstoffzelle an ein elektrisches Versorgungsnetz, bei dem die Einspeisung dauerhaft mit +/-5% der Blindleistung gestört wird, um ein Inselnetz zu erkennen. Sofern die Blindleistungsänderung zu einer Änderung von Netzparametern führt, wird die Wirkleistung auf 80% reduziert, um das Vorliegen eines Inselnetzes zu bestätigen.

Der Erfindung liegt die Aufgabe zugrunde, ein Verfahren anzugeben, das zuverlässig eine Inselnetzerkennung erlaubt, wobei ein zusätzlicher Energieverbrauch für die Bereitstellung einer unterbrechungsfreien Stromversorgung minimal sein soll sowie unangenehme Begleiterscheinungen, wie zusätzliche Bauteilbelastung oder Geräusche, vermieden werden sollen.

Diese Aufgabe wird erfindungsgemäss dadurch gelöst, dass der Stromrichterspannung ein Testsignal mit einer Testfrequenz überlagert wird, dessen Frequenz kleiner als die Netzfrequenz ist, wobei die Amplitude des Testsignals einerseits sehr viel kleiner als die Nennspannungsamplitude der Netzspannung ist, jedoch andererseits gerade noch so gross ist, dass Blindleistungsänderungen infolge des Testsignals erkennbar sind, wobei hieraus ein Blindleistungsanteil ermittelt wird, der mit der Testfrequenz schwingt, wobei dieser Anteil ein vorgegebenes Minimum nicht unterschreiten darf, damit ein Inselnetzbetrieb sicher ausgeschlossen werden kann. Der Wechselrichter wird bei Unterschreiten des vorgegebenen Minimums vom Energieversorgungsnetz, bevorzugt mittels eines Transferschützes, getrennt und am Wechselrichter angeschlossene Verbraucher werden weiter versorgt.

Der Erfindung liegt die Erkenntnis zugrunde, dass sich im Betrieb der Blindleistungsfluss mit der Testfrequenz ändert, wenn das öffentliche Netz stabil ist. Fällt das öffentliche Netz aus, erfährt der Blindleistungsfluss kaum Änderungen aufgrund des Testsignals.

Der Stromrichterspannung wird erfindungsgemäss ein Testsignal mit einer Frequenz (Testfrequenz) überlagert, die kleiner als die Netzfrequenz ist, wobei dessen Amplitude klein gegenüber der Netzspannung ist, wobei der netzseitige Blindleistungsanteil, der mit der Testfrequenz schwingt, aber noch ermittelt werden kann. Dieser Anteil darf ein vorgegebenes Minimum nicht unterschreiten, damit ein Inselnetzbetrieb sicher ausgeschlossen werden kann.

Das erfindungsgemässe Verfahren hat den Vorteil, dass der zusätzliche Energieaufwand minimal ist. Es tritt keine oder nur eine geringe zusätzliche Bauteilbelastung auf. Das Verfahren verursacht auch keine Geräusche; vorhandene Algorithmen zur Blindleistungsermittlung können genutzt werden;, ein zusätzlicher Energieverbrauch für die Bereitstellung einer unterbrechungsfreien Stromversorgung ist minimal; Verschiebungen des Nulldurchgangs, die z.B. durch Rundsteuersignale verursacht werden, führen nicht zu unbeabsichtigten Inselnetzerkennungen. Auch ist nicht erforderlich, mehrere Frequenzen rechentechnisch zu analysieren. Dadurch ist der Rechenaufwand minimal.

In einer vorteilhaften Weiterbildung des erfindungsgemässen Verfahrens ist vorgesehen, dass die Spannungsamplitude des Testsignals kleiner als 2% der Nennspannungsamplitude der Netzspannung ist. Dadurch wird der zusätzliche Energiebedarf minimiert, wobei dennoch eine Inselnetzerkennung zuverlässig durchgeführt werden kann.

Als sehr vorteilhaft hat sich herausgestellt, wenn die Frequenz der Testfrequenz erheblich kleiner als die Netzfrequenz ist, und zwar insbesondere, wenn die Frequenz des Testsignals 0,5 bis 5 Hz beträgt. Diese Frequenz kann gut herausgefiltert werden, weil sie weit entfernt von der Netzfrequenz liegt.

Eine weitere vorteilhafte Weiterbildung der Erfindung zeichnet sich dadurch aus, dass der Anteil der mit der Testfrequenz schwingenden Netzblindleistung mit Hilfe mindestens eines sogenannten verallgemeinerten Integrators herausgefiltert wird. Solche Integratoren arbeiten zuverlässig und sind zum Beispiel aus der DE 199 49 997 A1 bekannt.

Optimal ist es, wenn zwei Integratoren vorhanden sind, wobei ein Ausgangssignal eines ersten Integrators einem zweiten Integrator zugeführt wird, wobei die Ausgänge des zweiten Integrators Quadriergliedern zugeführt werden, und dann die Ausgänge der Quadrierglieder in einem Addierer addiert und wobei die Ausgangsgrösse in einem Radizierer radiziert und dann in einer Auswertungseinheit ausgewertet wird. Hierdurch wird ein sehr gutes Filterergebnis erreicht. Zweckmässigerweise wird ein Gleichsignal aus dem Radizierer in der Auswertungseinheit mit einem Schwellwert verglichen und dahingehend überwacht, ob der Schwellwert für das Gleichsignal unterschritten wird, wobei diese Unterschreitung als Inselnetzbildung interpretiert wird, so dass eine Trennung des Wechselrichters vom Netz erfolgt. In der Auswertungseinheit wird somit überwacht, ob eine minimale Schwelle für das Gleichsignal unterschritten wird, wobei diese Unterschreitung als Inselnetzbildung interpretiert wird.

Alternativ hierzu kann aber auch eine Filterung der Blindleistung anhand eines Görzelalgorithmus oder mittels Fouriertransformation erfolgen. Hierbei kann eine geeignete FFT oder eine normale Fouriertransformation eingesetzt werden. Grundsätzlich können auch andere geeignete Verfahren zur Bestimmung einer charakteristischen Grösse aus einem zeitlich periodischen Signal eingesetzt werden.

Eine weitere, sehr wichtige, bevorzugte Massnahme beinhaltet, dass das erfindungsgemässe Verfahren auf ein Dreiphasensystem anwendbar ist. Aus Sicherheitsgründen ist es wichtig, dass ein ausgefallenes Netz vorzugsweise mittels eines Transferschützes getrennt wird. Vorzugsweise ist der Wechselrichter als Batteriewechselrichter ausgeführt, wobei die Batterie als elektrischer Energiespeicher bei Stromausfall dient oder um überschüssige Energie eines Photovoltaikgenerators zu speichern.

Der Wechselrichter kann aber auch für eine drehzahlvariable Verbrennungsmaschine, z. B. für einen Windgenerator, eine Wasserkraftanlage oder eine Photovoltaikanlage, ausgeführt sein. Auch hier ist es wichtig, diese Generatoren vom Netz zu trennen, wenn dieses ausgefallen ist.

Ein gutes Konzept ist es, wenn an dem Wechselrichter mindestens ein weiterer mit einem Generator, insbesondere einem Photovoltaikgenerator, verbundener zweiter Wechselrichter parallel geschaltet ist. So können elektrische Verbraucher entweder vom öffentlichen Netz, vom Photovoltaikgenerator und/oder von der Batterie gespeist werden.

Weitere vorteilhafte Ausgestaltungen der Erfindung sind den Unteransprüchen zu entnehmen.

Anhand der Zeichnungen wird die Erfindung nachstehend beispielhaft näher erläutert.

Es zeigen:

Fig. 1 eine Darstellung einer Schaltungsanordnung mit einem Batteriewechselrichter,

Fig. 2 eine Darstellung einer Integratorschaltung,

Fig. 3 eine Darstellung einer Schaltungsanordnung zur Inselnetzerkennung, und

Fig. 4 ein Zeigerdiagramm mit einer Stromrichterspannung $U_s$ und einer Netzspannung $U_n$.

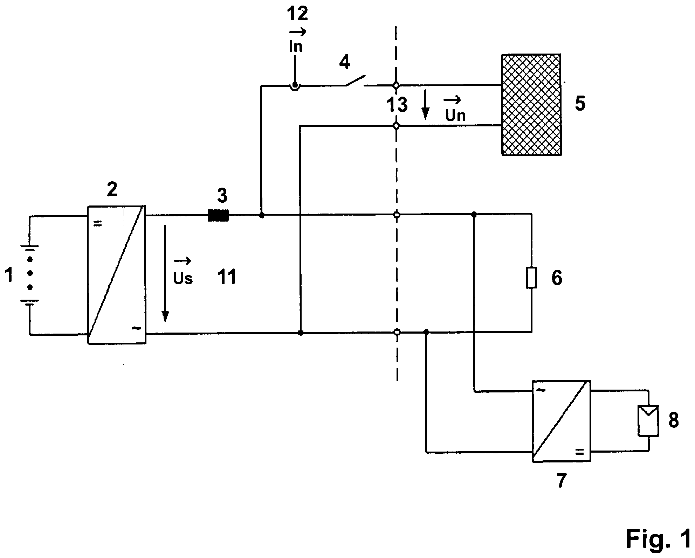

Fig. 1 zeigt eine Darstellung einer Schaltungsanordnung mit einem Batteriewechselrichter 2.

Die Schaltungsanordnung stellt eine Eigenerzeugungsanlage für elektrische Energie dar. Sie umfasst ausser dem Batteriewechselrichter 2, an dem eine wiederaufladbare Batterie 1 angeschlossen ist, auch einen Solargenerator bzw. Photovoltaikgenerator 8 mit einem zweiten Wechselrichter 7, der parallel zum Batteriewechselrichter geschaltet ist. Der Batteriewechselrichter 2 ist mit einer Drossel 3 parallel zu einem Energieversorgungsnetz 5 geschaltet, wobei dazwischen ein Transferschutz 4 angeordnet ist.

Anstatt oder zusätzlich zu dem Photovoltaikgenerator 8 und/oder der Batterie kann auch eine Windenergieanlage mit PM-Generator, ein drehzahlvariabler Verbrennungsmotor, eine Brennstoffzelle und dergleichen eingesetzt werden. Diese werden in zunehmendem Masse zur Energieerzeugung genutzt.

Für solche Eigenerzeugungsanlagen gelten häufig Sondertarife, so dass es für den Betreiber solcher Anlagen attraktiv ist, den erzeugten Strom ins öffentliche Versorgungsnetz einzuspeisen. Beim Parallelbetrieb mit dem öffentlichen Netz müssen besondere Sicherheits- und Anschlussbedingungen berücksichtigt werden.

Besonders hervorzuheben ist dabei eine vorhandene Netzüberwachung. Eine Eigenerzeugungsanlage muss erkennen, ob das öffentliche Netz ausfällt, und dann ihren Betrieb einstellen. Sie darf nicht weiter in das Netz einspeisen, weil eventuell bei Wartungsarbeiten im öffentlichen Netz eine Personengefährdung eintreten kann, wenn ein Netzabschnitt freigeschaltet wurde, die Eigenerzeugungsanlage in diesem Abschnitt aber weiterarbeitet.

Wenn eine Eigenerzeugungsanlage gemäss Fig. 1 vorhanden ist, möchte der Betreiber damit einen Verbraucher 6 weiter versorgen, wenn das öffentliche Energieversorgungsnetz ausfällt. Zu diesem Zweck muss die Eigenerzeugungsanlage um den batteriegestützten zusätzlichen Wechselrichter 2 bzw. Batteriewechselrichter 2 ergänzt werden.

Daher wird ein Verfahren zur Inselnetzerkennung für den eine Stromrichterspannung führenden Wechselrichter 2 eingesetzt, der parallel zu dem Energieversorgungsnetz 5 mit einer Netzfrequenz von 50 oder 60 Hz arbeitet und mit den elektrischen Verbrauchern 8 verbindbar ist. Der Wechselrichter 2 wird durch die Drossel 3 vom Energieversorgungsnetz 5 entkoppelt.

Erfindungsgemäss wird der Stromrichterspannung ein Testsignal mit einer Testfrequenz überlagert, dessen Frequenz kleiner als die Netzfrequenz ist, wobei die Amplitude des Testsignals einerseits sehr viel kleiner als die Nennspannungsamplitude der Netzspannung ist, jedoch andererseits gerade noch so gross ist, dass Blindleistungsänderungen infolge des Testsignals erkennbar sind. Dabei wird ein Blindleistungsanteil ermittelt und unterhalb eines definierten Wertes wird dann der Wechselrichter vom Netz getrennt.

Durch diese Netztrennung sind die Verbraucher 8 nicht mehr mit dem Netz 5 verbunden.

Der Batteriewechselrichter 2 stellt bei Stromausfall des Netzes 5 auch dann die Versorgung der Verbraucher sicher, wenn die Eigenerzeugungsanlage im Moment keine Energie liefern kann, weil zum Beispiel wolkiges Wetter mit geringer Solarstrahlung herrscht. Dieser Batteriewechselrichter 2 ist mit dem Transferschütz ausgestattet, mit dem die Verbindung der Eigenerzeugungsanlage zum öffentlichen Versorgungsnetz bzw. dem Netz 5 unterbrochen werden kann.

Die Eigenerzeugungsanlage besteht also aus dem Solarwechselrichter 7, dem Photovoltaikgenerator 8 und dem Batteriewechselrichter 2.

Wie Fig. 1 veranschaulicht, ist die Batterie 1 über den Batteriewechselrichter und der Entkopplungsdrossel 3, sowie über den Transferschütz 4 mit dem Energieversorgungsnetz 5 verbunden. Die Verbraucher 6 werden vom Netz 5 oder, wenn das Transferschütz 4 geöffnet ist, vom Batteriewechselrichter 2 versorgt. Der Solargenerator 8 kann über den Solarwechselrichter 7 dazu beitragen, die Verbraucher 6 zu versorgen. Wenn mehr Solarenergie erzeugt wird, als der Verbraucher 6 benötigt, kann die Batterie über den Batteriewechselrichter 2 geladen bzw. Energie ins Netz 5 eingespeist werden. Der Wechselrichter 2 ist daher vorzugsweise als bidirektioneller Wechselrichter ausgeführt.

Falls das Netz 5 wegfällt, muss diese Situation schnell erkannt werden, damit das Transferschütz 4 sofort geöffnet werden kann und damit die Verbraucher 6 unterbrechungsfrei versorgt werden können. Hierzu wird das erfindungsgemässe Verfahren eingesetzt.

Die Stromrichterspannung 11, der Netzstrom 12 und die Netzspannung 13 werden gemessen und in digitalisierter Form einem nicht gezeigten geeigneten Digitalrechner, insbesondere einem Mikroprozessor, zugeführt. Der Stromrichterspannung 11 wird nun eine Testspannung mit sehr kleiner Amplitude, insbesondere ca. 1 % der Netzspannung oder weniger und einer Testfrequenz viel kleiner der Netzfrequenz von 50Hz oder 60Hz überlagert. Die Blindleistung, d.h. die netzfrequente Blindleistung auf der Netzseite, wird vorzugsweise auch für andere Regelaufgaben ermittelt. Daher stellt die Ermittlung der Blindleistung keinen zusätzlichen Aufwand dar. Der Anteil der Blindleistung, der mit der Testfrequenz schwingt, wird mit Hilfe eines sogenannten verallgemeinerten Integrators herausgefiltert. Solche verallgemeinerten Integratoren werden in der DE 199 49 997 A1 näher ausgeführt.

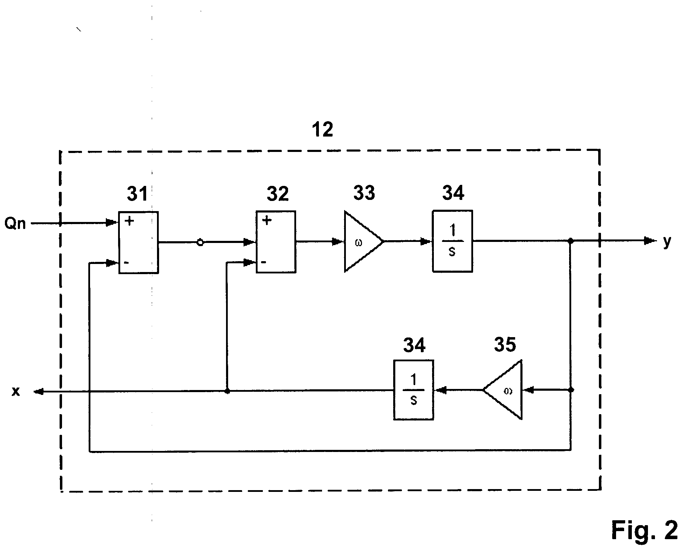

In Fig. 2 ist ein solcher verallgemeinerter Integrator veranschaulicht. Der Integrator umfasst zwei Subtraktionsglieder 31 und 32, zwei Verstärker 33 und 35 und zwei Integratoren 34 und 36. Die Verstärker 33, 35 multiplizieren das jeweilige Eingangssignal mit einer Kreisfrequenz, auf die der verallgemeinerte Integrator abgestimmt ist. In diesem Beispiel ergibt sich die Kreisfrequenz aus der Testfrequenz multipliziert mit 2 x Pi (Hz). Als Eingangsgrösse der gezeigten Schaltung dient die netzseitige netzfrequente Blindleistung. Am Ausgang y erhält man den Blindleistungsanteil, der mit der Testfrequenz schwingt. Der Ausgang x ist der um 90° gegenüber dem Ausgang y verschobene Blindleistungsanteil, der mit der Testfrequenz schwingt.

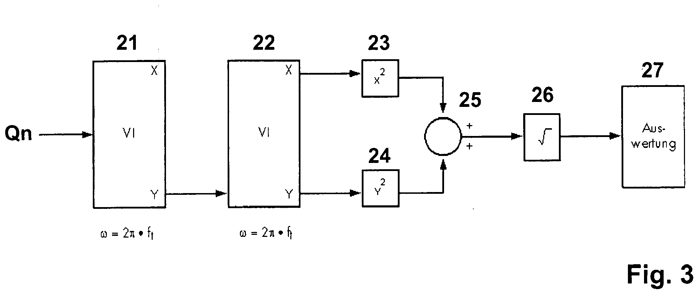

In Fig. 3 ist ein Blockschaltbild zur Erkennung einer Inselnetzbildung dargestellt. Die Inselnetzerkennung kann durch eine analoge Schaltung oder durch ein Mikroprozessorprogramm erfolgen. Daher stellt Fig. 3 den kompletten Algorithmus dar, der zur Erkennung einer Inselnetzbildung notwendig ist.

Die netzseitige netzfrequente Blindleistung dient als Eingangsgrösse für den verallgemeinerten Integrator 21. Dessen Ausgangsgrösse y dient als Eingangsgrösse für den verallgemeinerten Integrator 22, dieser erzeugt dann die Ausgangssignale x und y, die um 90 ° gegeneinander verschoben sind. Diese Ausgangssignale werden anschliessend in Quadriergliedern 23 und 24 quadriert und die Ausgänge der Quadrierglieder in einem Addierer 25 addiert; dessen Ausgangsgrösse wird in einem Radizierer 26 radiziert und schliesslich einer Auswertungseinheit 27 zugeführt. Die Auswertungseinheit 27 sowie die anderen Glieder können durch ein Programm des Mikroprozessors, also nur durch Software, realisiert werden.

Der Ausgang des Radizierers 26 ist eine Gleichgrösse. Die Auswertung 27 überwacht diese Gleichgrösse. Fällt die Gleichgrösse unter eine vorgegebene Schwelle, so liegt eine Inselnetzbildung vor, weil die netzseitige Blindleistung nicht oder nur sehr wenig mit der Testfrequenz schwingt.

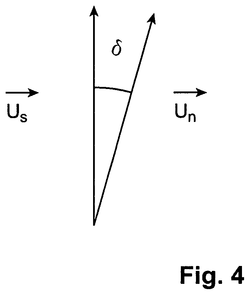

Fig. 4 zeigt ein Spannungsdiagramm. Dieses dient zur Veranschaulichung folgenden mathematischen Zusammenhanges.

Die Leistung P berechnet sich aus

$$P = ((U_s \times U_n) / (\omega \times 2L)) \times \sin \delta$$

$$\approx ((U_s \times U_n) / (\omega \times 2L)) \times \delta \quad (\text{für kleine Winkel } \delta)$$

Die Blindleistung Q beträgt

$$Q = (U_s^2 - U_s \times U_n) / (\omega \times 2L)$$

$$Q = Qn [\, \underline{i}_n, \underline{u}_n \,]$$

$U_s$ ist dabei eine Stromrichterspannung und $U_n$ eine Netzspannung. Für kleine Spannungsdifferenzen zwischen $U_s$ und $U_n$ gilt der obige Zusammenhang, aus dem man leicht sehen kann, dass bei kleinen Differenzen der Blindleistungsfluss den Wirkleistungsfluss deutlich übersteigt.

Um die Leistung zu erhöhen, ist es vorteilhaft, dass mehrere Batteriewechselrichter 2 parallel geschaltet werden können. Weiter ist es vorteilhaft, dass die Wechselrichter spannungsgeregelt sind, wobei jeder Wechselrichter 2 eine Entkopplungsdrossel 3 aufweist. Die Netzspannung, die Netzfrequenz, die Wechselrichterwirkleistung und die Wechselrichterblindleistung werden dabei gemessen. Die momentane Netzspannung dient dabei als Grundlage zur Errechnung des erforderlichen Blindleistungssollwertes. Die Blindleistung wird dann von einem Regler des Batteriewechselrichters entsprechend dieses Sollwertes eingestellt. Dabei gilt, dass mit abnehmender Spannung die Blindleistung erhöht wird. Die momentane Netzfrequenz dient dabei als Grundlage zur Errechnung des erforderlichen Wirkleistungssollwertes. Die Wirkleistung wird dann vom Regler des Batteriewechselrichters 2 entsprechend dieses Sollwertes eingestellt. Dabei gilt, dass bei abnehmender Frequenz die Wirkleistung erhöht wird.

Eine in dieser Konstellation schon vorhandene Blindleistungsmessung im Wechselrichter 2 wird vorzugsweise in dem erfindungsgemässen Verfahren zur Inselnetzerkennung nutzbar gemacht.

In dem gezeigten Beispiel wird also die Amplitude der Stromrichterspannung mit einer sinusförmigen Grösse überlagert, wobei die Frequenz der überlagerten Spannung (Testfrequenz) sehr viel kleiner als die Netzfrequenz ist (ca. 1 bis 2 Hz) und die Spannungsamplitude der überlagerten Spannung gerade gross genug ist, dass die Reaktion auf diese Spannungsänderung ausreichend genau erkannt werden kann (ca. 1 % der Nennspannungsamplitude oder weniger). Der Blindleistungsfluss wird auf der Netzseite gemessen. Wenn das öffentliche Netz stabil ist, ändert sich dieser Blindleistungsfluss mit der Testfrequenz. Fällt das öffentliche Versorgungsnetz aus, variiert der Blindleistungsfluss dann nicht mehr bzw. variiert deutlich weniger mit der Testfrequenz. Diese Änderung wird registriert und anhand der Änderung des Blindleistungsflusses wird nun der Wegfall des öffentlichen Netzes registriert. Das Transferschütz 4 muss daraufhin geöffnet werden.

Die Erfindung ist nicht auf dieses Beispiel beschränkt, so kann die Filterung der Blindleistung bezüglich des Anteils, der mit der Testfrequenz schwingt, auch mit anderen Algorithmen erfolgen.

Das Verfahren kann auch in dreiphasigen Systemen angewendet werden. Dabei kann jede Phase unabhängig von den anderen Phasen betrachtet werden. Die Testsignale müssen nicht synchronisiert werden.

Es kann in Dreiphasensystemen mit drei Phasen eine Spannung derart aufmoduliert werden, dass das Spannungssignal in den drei Phasen um jeweils 120° bezogen auf die Netzfrequenz verschoben ist. Dadurch erhält man ein Raumzeigersignal dieses Dreiphasensystems, auf das eine Spannung mit der Testfrequenz aufgeprägt ist. Die Ermittlung der Blindleistung, die mit der Testfrequenz schwingt, kann dann aus dem ins Raumzeigermodell umgerechneten Netzstrom und der ins Raumzeigermodell umgerechneten Netzspannung erfolgen.

Es können mehrere parallele Stromrichter am Netz betrieben werden. Die Testsignale der einzelnen Stromrichter werden dann über eine geeignete Datenverbindung synchronisiert.

Es können auch mehrere parallele Stromrichter am Netz betrieben werden, wenn die Testsignale der einzelnen am Netz parallel geschalteten Stromrichter in ihrer Frequenz leicht variieren und dadurch unabhängig betrachtet werden können.

Die Filterung derjenigen Blindleistung, die mit der Testfrequenz schwingt, kann anhand des Görzelalgorithmus, oder einer geeigneten FFT oder einer normalen Fouriertransformation erfolgen, falls ein verallgemeinerter Integrator nicht angewandt werden soll.

**Bezugszeichenliste**

| 1 : | Batterie |
|---|---|
| 2 : | Batteriewechselrichter |
| 3 : | Entkopplungsdrossel |
| 4 : | Transferschütz |
| 5 : | Energieversorgungsnetz |
| 6 : | Verbraucher |
| 7 : | Zweiter Wechselrichter |
| 8 : | Photovoltaikgenerator |
| 11 : | Stromrichterspannung |
| 12 : | Netzstrom |
| 13 : | Netzspannung |
| 21 : | Erster Integrator |
| 22 : | Zweiter Integrator |
| 23, 24 : | Quadrierglieder |
| 25 : | Addierer |
| 26 : | Radizierer |
| 27 : | Auswertungseinheit |
| 31,32 : | Subtraktionsglieder |
| 33 : | erster Verstärker |
| 34 : | erster Integrator |
| 35 : | zweiter Verstärker |
| 36 : | zweiter Integrator |

**Patentansprüche**

1. Verfahren zur Inselnetzerkennung für einen eine Stromrichterspannung führenden Wechselrichter (2), der parallel zu einem Energieversorgungsnetz (5) mit einer Netzfrequenz und mit elektrischen Verbrauchern verbindbar ist und der durch eine Drossel (3) vom Energieversorgungsnetz (5) und den elektrischen Verbrauchern entkoppelt ist, **dadurch gekennzeichnet dass**, der Wechselrichter (2) als spannungsgeregelter Wechselrichter (2) ausgeführt ist und dass der Stromrichterspannung eine sinusförmige Testspannung überlagert wird, deren Testfrequenz kleiner als die Netzfrequenz und deren Amplitude kleiner als 2% der Netzspannung ist, wobei ein der Testspannung zugeordneter netzseitiger Blindleistungsanteil ermittelt wird, der mit der Testfrequenz schwingt, wobei dieser Anteil ein vorgegebenes Minimum nicht unterschreiten darf, damit ein Inselnetzbetrieb sicher ausgeschlossen werden kann, wobei der Wechselrichter (2) bei Unterschreiten des vorgegebenen Minimums vom Energieversorgungsnetz (5), bevorzugt mittels eines Transferschützes (4), getrennt wird und am Wechselrichter (2) angeschlossene Verbraucher (6) weiter versorgt werden.

**2.** Verfahren nach Anspruch 1,
**dadurch gekennzeichnet,**
**dass** die Spannungsamplitude des Testsignals etwa 1% der Nennspannungsamplitude der Netzspannung ist.

**3.** Verfahren nach Anspruch 1 oder 2,
**dadurch gekennzeichnet,**
**dass** die Frequenz des Testsignals erheblich kleiner als die Netzfrequenz ist.

**4.** Verfahren nach Anspruch 3,
**dadurch gekennzeichnet,**
**dass** die Frequenz des Testsignals 0,5 bis 5 Hz beträgt.

**5.** Verfahren nach einem der vorhergehenden Ansprüche,
**dadurch gekennzeichnet,**
**dass** der Anteil der Netzblindleistung, der mit der Testfrequenz schwingt, mit Hilfe mindestens eines Integrators (21, 22) herausgefiltert wird.

**6.** Verfahren nach Anspruch 5,
**dadurch gekennzeichnet,**
**dass** zwei Integratoren (21, 22) vorhanden sind, wobei ein Ausgangssignal eines ersten Integrators (21) einem zweiten Integrator (22) zugeführt wird, wobei Ausgänge (x, y) des zweiten Integrators (22) Quadriergliedern (23, 24) zugeführt werden, und wobei Ausgänge der Quadrierglieder (23, 24) in einem Addierer (25) addiert und dessen Ausgangsgrösse in einem Radizierer (26) radiziert und in einer Auswertungseinheit (27) ausgewertet wird.

**7.** Verfahren nach Anspruch 6,
**dadurch gekennzeichnet,**
**dass** ein Gleichsignal aus dem Radizierer (26) in der Auswertungseinheit (27) mit einem Schwellwert verglichen wird und dahingehend überwacht wird, ob der Schwellwert für das Gleichsignal unterschritten wird, wobei diese Unterschreitung als Inselnetzbildung interpretiert wird, so dass eine Trennung des Wechselrichters vom Netz erfolgt.

**8.** Verfahren nach einem der Ansprüche 1 bis 4,
**dadurch gekennzeichnet,**
**dass** eine Filterung derjenigen Blindleistung, die mit der Testfrequenz schwingt, anhand eines Görzelalgorithmus oder mittels Fouriertransformation erfolgt.

**9.** Verfahren nach einem der vorhergehenden Ansprüche,
**gekennzeichnet durch**,
eine Anwendung auf ein Dreiphasensystem.

**10.** Verfahren nach Anspruch 9,
**dadurch gekennzeichnet,**
**dass** in dem Dreiphasensystemen mit Dreiphasenstromrichtern die Testfrequenz derart aufmoduliert wird, dass ein Spannungssignal in den drei Phasen um jeweils 120 deg. bezogen auf die Netzfrequenz verschoben ist, wodurch man ein Raumzeigersignal dieses Dreiphasensystems erhält, auf das eine Spannung mit der Testfrequenz aufgeprägt ist, wobei die mit der Testfrequenz schwingende Blindleistung ermittelt wird, und zwar derart, dass einem ins Raumzeigermodell umgerechneten Netzstrom und einer ins Raumzeigermodell umgerechneten Netzspannung die Ermittlung erfolgt.

**11.** Verfahren nach einem der vorhergehenden Ansprüche,
**dadurch gekennzeichnet,**

**dass** der Wechselrichter als Batteriewechselrichter (2) ausgeführt ist und eine Batterie als elektrischer Energiespeicher angeschlossen ist.

12. Verfahren nach einem der vorhergehenden Ansprüche,
**dadurch gekennzeichnet,**
**dass** der Wechselrichter (2) für eine drehzahlvariable Verbrennungsmaschine, einen Windgenerator, oder eine Wasserkraftanlage oder eine Photovoltaikanlage ausgeführt ist.

13. Verfahren nach einem der vorhergehenden Ansprüche,
**dadurch gekennzeichnet,**
**dass** der Wechselrichter (2) durch ein Transferschütz (4) mit dem Energieversorgungsnetz (5) verbunden ist, so dass der Wechselrichter vom Netz (5) trennbar ist.

**Claims**

1. A method for island network detection for an inverter (2) controlling a converter voltage, for connection in parallel to a power supply network (5) with a network frequency and to electrical loads and being decoupled from the power supply network (5) and the electrical loads by a choke (3),
**characterized in that**,
the inverter (2) is provided as a voltage-controlled inverter (2) and **in that** a sinusoidal test voltage is superimposed on the converter voltage, the test frequency of the test voltage is smaller than the network frequency and the amplitude of the test voltage is smaller than 2% of the network voltage, wherein a reactive power component on the network side assigned to the test voltage and oscillating at the test frequency is determined, wherein this component must not fall below a predetermined minimum, in order to reliably exclude an island network operation, wherein the inverter (2) is disconnected from the power supply network (5), preferably by means of a transfer contactor (4), when the component falls below the predetermined minimum, and loads (6) connected to the inverter (2) are further supplied.

2. The method according to claim 1, **characterized in that** the voltage amplitude of the test signal is approximately 1% of the nominal voltage amplitude of the network voltage.

3. The method according to claim 1 or 2, **characterized in that** the frequency of the test signal is considerably lower than the network frequency.

4. The method according to claim 3, **characterized in that** the frequency of the test signal is 0.5 to 5 Hz.

5. The method according to one of the preceding claims, **characterized in that** the component of the network reactive power oscillating at the test frequency is filtered out with the aid of at least one integrator (21, 22).

6. The method according to claim 5, **characterized in that** two integrators (21, 22) are present, an output signal of a first integrator (21) being fed to a second integrator (22), outputs (x, y) of the second integrator (22) being fed to squaring elements (23, 24), and outputs of the squaring elements (23, 24) being added in an adder (25), an output variable of which is extracted in a root extractor (26) and evaluated in an evaluation unit (27).

7. The method according to claim 6, **characterized in that** a DC signal from the root extractor (26) is compared with a threshold value in the evaluation unit (27) and it is monitored to whether the threshold value for the DC signal is undershot, this undershot being interpreted as island network formation, so that the inverter is disconnected from the network.

8. The method according to one of claims 1 to 4, **characterized in that** the reactive power oscillating at the test frequency is filtered by means of a Goerzel algorithm or by means of Fourier transformation.

9. The method according to one of the preceding claims, **characterized by** an application to a three-phase system.

10. The method according to claim 9, **characterized in that**, in the three-phase systems with three-phase inverters, the test frequency is modulated in such a way that a voltage signal in the three phases is shifted by 120 deg. with respect to the network frequency in each case, whereby a space vector signal of this three-phase system is derived to which a voltage is impressed at the test frequency, wherein the reactive power oscillating at the test frequency is determined in such a way that a network current converted into the space vector model and a network voltage converted into the space vector model are determined.

11. The method according to one of the preceding claims, **characterized in that** the inverter is provided as a battery inverter (2) and a battery is connected as an electrical energy store.

12. The method according to one of the preceding claims, **characterized in that** the inverter (2) is designed for a variable-speed combustion engine, a wind generator, a hydroelectric power installation, or a photovoltaic system.

13. The method according to one of the preceding claims, **characterized in that** the inverter (2) is connected to the power supply network (5) by a transfer contactor (4) so that the inverter can be disconnected from the network (5).

**Revendications**

1. Procédé de reconnaissance d'un réseau fonctionnant en îlotage pour un onduleur (2) conduisant une tension de convertisseur, lequel peut être branché en parallèle avec un réseau d'alimentation en énergie (5) ayant une fréquence de réseau et avec des récepteurs électriques et lequel est découplé du réseau d'alimentation en énergie (5) et des récepteurs électriques par une inductance de protection (3), **caractérisé en ce que** l'onduleur (2) est réalisé sous la forme d'un onduleur (2) à régulation de tension et **en ce qu'**une tension de test sinusoïdale est superposée à la tension de convertisseur, dont la fréquence de test est inférieure à la fréquence de réseau et dont l'amplitude est inférieure à 2 % de la tension de réseau, une composante de puissance réactive côté réseau associée à la tension de test étant déterminée, laquelle oscille à la fréquence de test, cette composante ne devant pas devenir inférieure à un minimum prédéfini pour qu'un fonctionnement d'un réseau fonctionnant en îlotage puisse être exclu avec certitude, l'onduleur (2) étant déconnecté du réseau d'alimentation en énergie (5), de préférence au moyen d'un contacteur de transfert (4), dans le cas d'un franchissement du minimum prédéfini vers le bas et les récepteurs (6) raccordés à l'onduleur (2) continuant d'être alimentés.

2. Procédé selon la revendication 1, **caractérisé en ce que** l'amplitude de tension du signal de test est égale à environ 1 % de l'amplitude de tension nominale de la tension de réseau.

3. Procédé selon la revendication 1 ou 2, **caractérisé en ce que** la fréquence du signal de test est considérablement plus petite que la fréquence du réseau.

4. Procédé selon la revendication 3, **caractérisé en ce que** la fréquence du signal de test est de 0,5 à 5 Hz.

5. Procédé selon l'une des revendications précédentes, **caractérisé en ce que** la composante de puissance réactive de réseau qui oscille à la fréquence de test est éliminée par filtrage à l'aide d'au moins un intégrateur (21, 22).

6. Procédé selon la revendication 5, **caractérisé en ce que** deux intégrateurs (21, 22) sont présents, un signal de sortie d'un premier intégrateur (21) étant acheminé à un deuxième intégrateur (22), les sorties (x, y) du deuxième intégrateur (22) étant acheminées à des éléments de transfert à loi quadratique (23, 24), et les sorties des éléments de transfert à loi quadratique (23, 24) étant additionnées dans un additionneur (25) et les racines de leurs grandeurs de sortie étant extraites dans un extracteur de racine (26) et ensuite interprétées dans une unité d'interprétation (27).

7. Procédé selon la revendication 6, **caractérisé en ce qu'**un signal d'égalité issu de l'extracteur de racine (26) est comparé dans l'unité d'interprétation (27) avec une valeur de seuil et surveillé en vue déterminer si la valeur de seuil du signal d'égalité est franchie vers le bas, ce franchissement vers le bas étant interprété comme la formation d'un réseau fonctionnant en îlotage, de sorte qu'une déconnexion de l'onduleur du réseau a lieu.

8. Procédé selon l'une des revendications 1 à 4, **caractérisé en ce qu'**un filtrage de la puissance réactive qui oscille à la fréquence de test est réalisé à l'aide d'un algorithme de Görzel ou au moyen d'une transformée de Fourier.

9. Procédé selon l'une des revendications précédentes, **caractérisé par** une application sur un système triphasé.

10. Procédé selon la revendication 9, **caractérisé en ce que** dans le système triphasé comprenant des convertisseurs triphasés, la fréquence de test est surmodulée de telle sorte qu'un signal de tension dans les trois phases est respectivement décalé de 120 degrés par rapport à la fréquence du réseau, moyennant quoi un signal de vecteur spatial de ce système triphasé est obtenu, sur lequel est imprimé une tension ayant la fréquence de test, la puissance réactive qui oscille à la fréquence de test étant déterminée, et ce de telle sorte qu'un courant de réseau converti en modèle de vecteur spatial et une tension de réseau convertie en modèle de vecteur spatial sont déterminés.

**11.** Procédé selon l'une des revendications précédentes, **caractérisé en ce que** l'onduleur est réalisé sous la forme d'un onduleur à batterie (2) et une batterie est raccordée en tant qu'accumulateur d'énergie électrique.

**12.** Procédé selon l'une des revendications précédentes, **caractérisé en ce que** l'onduleur (2) est exécuté pour un moteur à combustion interne à vitesse de rotation variable, un aérogénérateur ou une centrale hydroélectrique ou une centrale photovoltaïque.

**13.** Procédé selon l'une des revendications précédentes, **caractérisé en ce que** l'onduleur (2) est relié au réseau d'alimentation en énergie (5) par un contacteur de transfert (4), de sorte que l'onduleur peut être déconnecté du réseau (5).

Fig. 1

Fig. 2

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1340988 A2
- EP 17648994 A1

- US 20030165036 A1
- DE 19949997 A1


**In der Beschreibung aufgeführte Nicht-Patentliteratur**

- **CHUTTCHAVAL JERAPUTRA et al.** Development of a Robust Anti-Islanding Algorithm for Utility Interconnection of Distributed Fuel Cell Powered Generation. *IEEE Transactions on Power Electronics,* 2004, vol. 19 (5